# EUROPÄISCHE PATENTSCHRIFT

(11) **EP 2 456 992 B1**
(45) Veröffentlichungstag und Bekanntmachung des Hinweises auf die Patenterteilung: **17.12.2014**
(21) Anmeldenummer: 10739296.1
(22) Anmeldetag: 15.07.2010
(51) Int. Cl.: F16D 7/06, F16D 37/02, F16F 9/53

(54) **DREHMOMENTBEGRENZTES KUPPLUNGSELEMENT SOWIE VERFAHREN ZUM DREHMOMENTBEGRENZTEN KUPPELN**
TORQUE-LIMITED COUPLING ELEMENT AND METHOD FOR TORQUE-LIMITED COUPLING
ÉLÉMENT DE COUPLAGE À LIMITEUR DE COUPLE, ET PROCÉDÉ DE COUPLAGE À LIMITATION DU COUPLE

(30) Priorität: 21.07.2009 DE 102009034055
(43) Veröffentlichungstag der Anmeldung: 30.05.2012
(73) Patentinhaber: Fraunhofer-Gesellschaft zur Förderung der angewandten Forschung e.V., 80686 München (DE)
(72) Erfinder: SEIPEL, Björn, 61197 Florstadt (DE); MATTHIAS, Michael, 64331 Weiterstadt (DE); JACKEL, Marco, 63599 Biebergemünd/Kassel (DE)
(74) Vertreter: Rösler, Uwe
(86) Internationale Anmeldenummer: PCT/EP2010/004349
(87) Internationale Veröffentlichungsnummer: WO 2011/009571

(56) Entgegenhaltungen:
- WO-A1-2008/024957
- DE-A1- 19 741 275
- US-A- 5 277 281

## Beschreibung

### Technisches Gebiet

Die Erfindung bezieht sich auf ein drehmomentbegrenztes Kupplungselement mit jeweils einem, um eine gemeinsame Drehachse drehbar gelagerten An- und Abtriebsteil, und wenigstens einem Verbindungsmittel, das aus einer ersten Position, in der das Verbindungsmittel den An- und Abtriebsteil unter Ausbildung eines Formschlusses drehfest miteinander verbindet, bei Überschreiten eines vorgebbaren, zwischen dem An- und Abtriebsteil wirkenden Grenzdrehmomentes in eine zweite Position überführbar ist, in der das An- und Abtriebsteil relativ zueinander drehbar gelagert sind. Neben bevorzugten Verwendungsweisen für das Kupplungselement wird zudem ein Verfahren zum drehmomentbegrenzten Kuppeln zwischen einem An- und Abtriebsteil beschrieben.

### Stand der Technik

Drehmomentbegrenzte Kupplungselemente werden beispielsweise in Drehmomentschlüsseln, vorzugsweise in sogenannten selbstauslösenden Drehmomentschlülssen eingesetzt, die es erlauben, Schraubverbindungen manuell oder aktorisch unterstützt mit einem bestimmt vorgebbaren Drehmoment anzuziehen. Ein derartiger Drehmomentschlüssel ist aus der DE 31 40 288 A1 zu entnehmen, der ein hülsenartiges Werkzeuggehäuse vorsieht, längs dem innenliegend eine in der Federcharakteristik variabel einstellbare Spiralfeder gelagert ist, die abtriebsseitig gegen eine zentral innerhalb des Werkzeuggehäuses gelagerte Zentralkugel lastet, die wiederum in Axial- und Radialrichtung gegen drei in gleicher Winkelverteilung angeordnete Kupplungskugeln drückt, die in einer Käfigkonstruktion radial geführt sind und gegen eine mit einer abtriebsseitig vorgesehenen, die Käfigkonstruktion radial umgebende Werkzeugbüchse unter Ausbildung eines Formschlusses in Wirkverbindung treten. Wird ein durch die variabel einstellbare Federcharakterisktik vorgebbares Drehmoment zwischen antriebsseitiger Werkzeughülse und abtriebsseitiger Werkzeugbüchse überschritten, so werden die Kupplungskugeln über eine Führungskulisse radial nach innen gedrückt, wodurch der Formschluss zwischen Kupplungskugeln und der abtriebsseitigen Werkzeugbüchse freigegeben wird, so dass keine weitere Kraftübertragung über den Drehmomentschlüssel möglich ist.

In einer weiterführenden Entwicklungsstufe sehen Vorrichtungen zur Drehmomentübertragung den Einsatz magnetorheologischer Flüssigkeiten vor, die Suspensionen von magnetisch polarisierbaren Teilchen in einer Trägerflüssigkeit darstellen, deren Viskosität sowie auch andere rheologische Eigenschaften in Gegenwart eines Magnetfeldes schnell und reversibel veränderlich einstellbar sind. Eine derartige magnetorheologische Drehmomentübertragungsvorrichtung ist der DE 10 2007 019 584 A1 zu entnehmen, die sich in besonderer Weise zur Ausbildung einer Kupplung, Bremse, Feststell- oder Blockiervorrichtung oder als Mensch-Maschine-Schnittstellenelement eignet. Die Vorrichtung weist wenigstens zwei relativ um eine gemeinsame Rotationsachse rotierbar gelagerte Vorrichtungsteile auf, die durch wenigstens einen Drehmomentübertragungsspalt getrennt sind, der mit einer magnetorheologischen Flüssigkeit gefüllt ist und von einem variabel einstellbaren Magnetfeld durchsetzt wird. Mit kontrolliert zunehmender Magnetfeldstärke erhöht sich die Viskosität der magnetorheologischen Flüssigkeit und zugleich auch die Friktion zwischen beiden um die Rotationsachse rotierbare gelagerten Vorrichtungsteile, zwischen denen ein letztlich vom Magnetfeld abhängiges MaximalDrehmoment übertragen werden kann. Im Gegensatz zur vorstehend beschriebenen rein mechanischen Lösung unter Verwendung der dort beschriebenen Kupplungskugeln tritt als Kraft übertragendes Element nun die magnetorheologische Flüssigkeit. Dies hat einerseits den Vorteil einer einfacheren konstruktiven Ausführung unter Vermeidung beweglich gelagerter, Kraft übertragender Elemente, anderseits erfährt die magnetorheologische Flüssigkeit hohe mechanische Scherbelastungen, wodurch die magnetorheologische Flüssigkeit Degradationen unterworfen ist, die die funktionellen Eigenschaften der Flüssigkeit nachhaltig zu beeinflussen vermögen.

Auf dem gleichen Kupplungsprinzip beruht eine Vielzahl weiterer Kupplungsausbildungen, die zur Kraftübertragung die Magnetfeld abhängige variable Viskositätseinstellung magnetorheologischer Flüssigkeiten nutzen. In diesem Zusammenhang sei auf folgende Druckschriften hingewiesen: WO 2006/086807 A1, DE 10 2007 015 053 A1, DE 698 05 483 T2 sowie WO 2008/024957 A1.

In der DE 11 2005 001 458 T2 ist eine Rotationsfluidkupplung beschrieben, die die nachteilhaften degradierenden Auswirkungen der bei den vorstehenden Kupplungstypen auftretenden Scherbeanspruchungen auf die magnetorheologische Flüssigkeit zwischen dem relativ zueinander drehenden An- und Abtriebsteilen der Kupplung zu minimieren versucht, indem eine in Reihe mit dem Antriebselement der Kupplung lösbare Kupplungseinrichtung vorgesehen ist, die eine Drehmomentübertragung zwischen An- und Abtriebsteil bedarfsweise verhindert.

### Darstellung der Erfindung

Ausgehend von den bekannten Realisierungsformen von Kupplungsvorrichtungen zur Drehmomentübertragung zwischen einem An- und Abtriebsteil gilt es einerseits dafür Sorge zu tragen, eine Drehmomentübertragung zwischen dem An- und Abtriebsteil möglichst exakt quantitativ einstellen zu können, insbesondere in jenen Fällen, in denen die Vorgabe eines maximalen Grenzdrehmomentes erforderlich ist, andererseits sollen die mit den bisher bekannten Kupplungssystemen, bei denen die Kraftübertragung auf Basis magnetorheologischer Flüssigkeiten beruht, verbundenen Nachteile, insbesondere in Bezug auf Degradationserscheinungen in den magnetorheologischen Flüssigkeiten, vermieden werden.

Zur Lösung der der Erfindung zugrunde liegenden Aufgabe ist im Anspruch 1 ein Drehmomentbegrenztes Kupplungselement beschrieben, Gegenstand des Anspruches 11 ist ein lösungsgemäßes Verfahren zum drehmomentbegrenzten Kuppeln und in den Ansprüchen 17 und 18 sind bevorzugte Verwendungen für ein derartiges Kupplungselement angegeben. Gegenstand der Unteransprüche sind vorteilhafte Weiterbildungen der Erfindung, die zugleich auch aus der weiteren Beschreibung insbesondere unter Bezugnahme auf die Ausführungsbeispiele zu entnehmen sind.

Dem lösungsgemäßen drehmomentbegrenzten Kupplungselement liegt die Idee zugrunde, das bewährte, rein mechanische Kupplungskonzept zur generellen Übertragung des Drehmomentes zwischen einem An- und Abtriebsteil zu nutzen und mit den variabel einstellbaren Übertragungseigenschaften einer magnetorheologischen Flüssigkeit zu kombinieren, mit der die rein quantitative Skalierung eines maximal vorgebbaren, zwischen dem An- und Abtriebsteil zu übertragenden Grenzdrehmoment möglich ist. Da die magnetorheologische Flüssigkeit bei dem lösungsgemäßen Kupplungskonzept nicht zwischen zwei relativ zueinander drehbeweglich gelagerten Kupplungsteilen als kraftübertragendes Medium eingesetzt wird, erfährt die Flüssigkeit auch keinerlei degradierende Scherbeanspruchungen. Auch kann auf diese Weise das bei herkömmlichen Fluidkupplungen auftretende parasitäre Schleifen zwischen dem An- und Abtriebsteil bedingt durch den jeweiligen Kontakt mit der magnetorheologischen Flüssigkeit vermieden, wodurch unnötige Energieverluste durch das Kupplungselement vermieden werden. Das lösungsgemäße Kupplungsprinzip vereint somit die Vorteile zweierlei Kupplungstechnologien, nämlich die des reinen mechanischen Kupplungskonzepts mit jenen einer Fluidkupplung und vermeidet zugleich deren Nachteile.

Lösungsgemäß zeichnet sich ein drehmomentbegrenztes Kupplungselement mit jeweils einem, um eine gemeinsame Drehachse drehbar gelagerten An- und Abtriebsteil, und wenigstens einem Verbindungsmittel, das aus einer ersten Position, in der das Verbindungsmittel den An- und Abtriebsteil unter Ausbildung eines Formschlusses drehfest miteinander verbindet, bei Überschreiten eines vorgebbaren, zwischen dem An- und Abtriebsteil wirkenden Grenzdrehmomentes in eine zweite Position überführbar ist, in der das An- und Abtriebsteil relativ zueinander drehbar gelagert sind, derart aus, dass das wenigstens eine Verbindungselement in der ersten Position mittel- oder unmittelbar in kraftschlüssiger Wirkverbindung mit einem innerhalb einer mit einer magnetorheologischen Flüssigkeit gefüllten Kammer beweglich gelagerten Verdrängungskörper steht, dessen Position innerhalb der Kammer von einer durch die magnetorheologische Flüssigkeit hervorgerufenen Verdrängungskraft gestützt ist. Zur Beeinflussung der Viskosität der magnetorheologischen Flüssigkeit ist eine Magnetfeld erzeugende Einheit an oder im Bereich der Kammer vorgesehen, durch die die Verdrängungskraft der magnetorheologischen Flüssigkeit beeinflussbar ist. Wird das Grenzdrehmoment zwischen dem An- und Abtriebsteil überschritten, so ist der Verdrängungskörper innerhalb der Kammer entgegen der durch die magnetorheologische Flüssigkeit hervorgerufenen Verdrängungskraft auslenkbar, wodurch der Formschluss zwischen dem Verbindungsmittel und dem An- und Abtriebsteil gelöst und die Drehmomentübertragung abrupt unterbrochen wird.

Grundsätzlich bedient sich das lösungsgemäße drehmomentbegrenzte Kupplungselement zur Drehmomentübertragung zwischen dem An- und Abtriebsteil einem rein mechanischen Kraftübertragungsmechanismus vergleichbar jenem, der dem in der eingangs gewürdigten DE 31 40 288 A1 beschriebenen Drehmomentschlüssel entspricht, bei dem ein Kraft- und Formschluss zwischen dem An- und Abtriebsteil mittels in ihrer radialen Lage veränderlichen Kupplungskugeln hergestellt wird. Anstelle des das Grenzdrehmoment quantitativ vorgebenden Federelementes im Falle der DE 31 40 288 A1, tritt bei dem lösungsgemäßen Kupplungselement eine mit einer magnetorheologischen Flüssigkeit gefüllte Kammer, in der ein Verdrängungskörper beweglich, vorzugsweise linearbeweglich gelagert ist, der über einen durch eine fluiddichte Kammeröffnung ragenden stegartigen Fortsatz mit den Verbindungselementen in Wirkverbindung tritt, die für einen Kraft- und Formschluss zwischen dem An- und Abtriebsteil sorgen. Um einstellen zu können, bei welcher Größe des zwischen dem An- und Abtriebsteil wirkenden Drehmomentes die Kupplung öffnen soll, also die Verbindungselemente ihren kraftbeaufschlagten Formschluss lösen sollen, gilt es eine auf die Verbindungselemente gerichtete einstellbare Grenzkraft zu generieren, die durch eine einstellbare Bewegbarkeit des Verdrängungskörpers durch die magnetorheologische Flüssigkeit innerhalb der Kammer herrührt. Hierbei unterteilt der Verdrängungskörper durch seine an die Raumform der Kammer angepasste Körperform das Kammervolumen in zwei Kammerteile, wobei beide Kammerteile über einen Verbindungskanal fluidisch miteinander verbunden sind. In einer bevorzugten Ausführungsform schließt die Kammer ein zylinderförmiges Volumen ein, innerhalb dem der ebenfalls zylinderförmig ausgebildete Verdrängungskörper die Kammer in einen vorderen und einen hinteren Kammerteil unterteilt, die beide durch einen Ringspalt, der von dem Verdrängungskörper und der Kammerinnenwand begrenzt ist, verbunden sind.

Wird bevorzugter Weise im Bereich des Verbindungskanals bzw. Ringspaltes ein Magnetfeld angelegt, so wird in diesem Bereich die Viskosität der magnetorheologischen Flüssigkeit stark beeinflusst, wodurch es in Abhängigkeit des Magnetfeldes mehr oder weniger schwer ist die Flüssigkeit von einem Kammerteil durch den Ringspalt in den anderen Kammerteil zu drücken. Somit ist der Verdrängungskörper mehr oder weniger leicht in axialer Richtung längs der Kammer verschiebbar, so dass durch Einstellen der Magnetfeldstärke eine skalierbare Halte- oder Stützkraft zur Aufrechterhaltung des Formschlusses der Verbindungselemente mit dem An- und Abtriebsteil der Kupplung erzeugbar ist. Wird die Einsatz bedingt das Grenzdrehmoment überschritten, so wird der Verdrängungskörper entgegen der auf ihn innerhalb der Kammer einwirkenden Verdrängungskräfte aus seiner Lage verschoben, wodurch der Formschluss freigegeben wird. Tritt dieser Fall ein, so ist es vorteilhaft das vorherrschende Magnetfeld abzuschalten, um materialverschleißende Reibkräfte innerhalb der Kupplung, denen insbesondere die Verbindungselemente unterliegen, weitgehend zu beseitigen.

Im Stadium eines abgeschalteten Magnetfeldes nimmt die magnetrheologische Flüssigkeit ihre niedrigste Viskosität an, so dass der Verdrängungskörper ohne großen Kraftaufwand in seine axiale Ausgangsstellung innerhalb der Kammer rückgeführt werden kann. Dies kann mit einer Rückstellfeder, die mit dem Verdrängungskörper wechselwirkt erfolgen. Die Kupplung befindet sich dann in einem Zustand, in dem nur noch ein sehr geringes Drehmoment übertragen werden kann, das hauptsächlich durch die Rückstellkraft der Feder hervorgerufen wird.

Dem lösungsgemäße Kupplungskonzept liegt das Verfahren zugrunde zum drehmomentbegrenzten Kuppeln zwischen einem, um eine gemeinsame Drehachse drehbar gelagerten Antriebsteil und einem Abtriebsteil, bei dem beide Teile mit wenigstens einem Verbindungsmittel zu Zwecken der Drehmomentübertragung eine lösbar feste Formschlussverbindung derart eingehen, dass das wenigstens eine Verbindungsmittel aus einer ersten Position, in der das Verbindungsmittel den An- und Abtriebsteil unter Ausbildung eines Formschlusses drehfest miteinander verbindet, bei Überschreiten eines vorgebbaren, zwischen dem An- und Abtriebsteil wirkenden Grenzdrehmomentes in eine zweite Position übergeführt wird, in der sich das An- und Abtriebsteil relativ zueinander drehen, wobei sich das Verfahren lösungsgemäß dadurch auszeichnet, dass das Grenzdrehmoment mit Hilfe einer magnetorheologischen Flüssigkeit beeinflusst wird, die mit einem Magnetfeld in Wechselwirkung tritt.

In besonders vorteilhafter Weise eignet sich das lösungsgemäße drehmomentbegrenzte Kupplungselement zur Realisierung eines Drehmomentschlüssels, mit dem das maximale Anziehmoment für eine Schraube exakt vorgebbar ist. Ein unbeabsichtigtes zu festes Anziehen der Schraube kann auf diese Weise verhindert werden. Zudem lässt sich das drehmomentbegrenzte Kupplungselement mit einer geeigneten Sensorik ergänzen, um das tatsächlich anliegende Drehmoment zwischen An- und Abtriebsteil zu erfassen. Hierzu bieten sich beispielsweise DMS-Messstreifen an, die an geeigneter Stelle des Kupplungsgehäuses anzubringen sind.

Auch lässt sich das lösungsgemäße Kupplungselement in besonders vorteilhafter Weise im Antriebsstrang von Werkzeugmaschinen integrieren, um beispielsweise einen motorischen Antrieb bei Erreichen eines bestimmten Grenzdrehmomentes vom abtriebsseitig vorgesehenen Werkzeug abzukoppeln. Auch lassen sich mit Hilfe einer vom Anwendungsfall abhängigen zeitlich variablen Magnetfeldgenerierung, durch die die Viskosität der magnetorheologischen Flüssigkeit verzögerungsfrei individuell einstellbar ist, individuelle Schaltcharakteristiken realisieren, die beispielsweise für schonendes Ein- bzw. Auskuppeln zwischen An- und Abtriebsteilen genutzt werden können.

In ähnlicher Weise kann das Kupplungselement auch in einem Antriebsstrang von Kraftfahrzeugen eingesetzt werden, um Kuppelvorgänge zu realisieren. Insbesondere bei Hybridfahrzeugen zur schnellen An- bzw. Auskupplung von Verbrennungsmotor und Elektromotor jeweils zur Antriebswelle, kann das lösungsgemäße Kupplungsprinzip in vorteilhafter Weise zum Einsatz kommen. Auch lassen sich Nebenaggregate in Kraftfahrzeugen, bspw. Lichtmaschine etc., über das erfindungsgemäße Kupplungskonzept schnell zu- oder abkuppeln.

Das lösungsgemäße Kupplungskonzept wird im Weiteren unter Bezugnahme auf zwei konkrete Ausführungsbeispiele näher erläutert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Querschnittsdarstellung durch ein erstes bevorzugtes Ausführungsbeispiel sowie
- Fig. 2: Querschnittsdarstellung durch ein zweites bevorzugtes Ausführungsbeispiel.

### Wege zur Ausführung der Erfindung, gewerbliche Verwendbarkeit

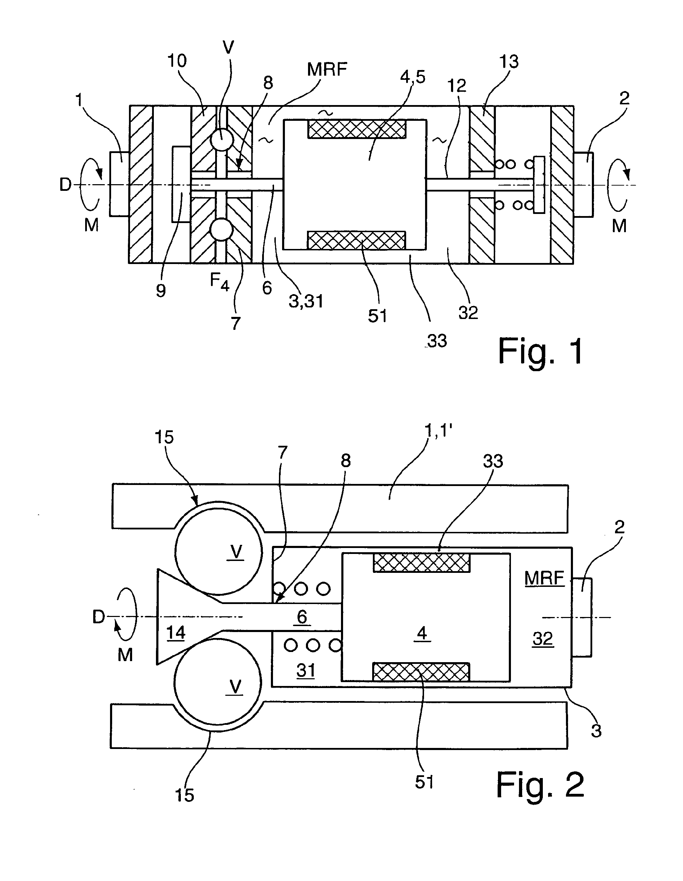

Das in Figur 1 im Querschnitt dargestellte Kupplungselement weist einen Antriebsteil 1 sowie Abtriebsteil 2 auf, die um eine gemeinsame Drehachse D drehbar gelagert angeordnet sind. Zur Übertragung eines Drehmoments M seitens des Antriebs 1 auf den Abtrieb 2 befinden sich beide Teile 1, 2 in einem gegenseitigen kraftbeaufschlagten Formschluss, der durch einen mechanischen Sperrmechanismus realisiert ist und kugelförmige Verbindungsmittel V vorsieht, die sowohl antriebs- als auch abtriebsseitig in entsprechende, an die Kugelkontur angepasste Ausnehmungen hineinragen und mit diesen jeweils einen Formschluss bilden. Anstelle von Kugeln eignen sich auch zylindrische Rollkörper, deren Zylinderachsen radial zur Drehachse D orientiert sind. Vorzugsweise sind zur kraftschlüssigen Drehmomentübertragung vom Antriebsteil 1 zum Abtriebsteil 2 zwei, drei oder mehrere um die Drehachse D gleich verteilt angeordnete Verbindungsmittel V vorgesehen.

Für einen sicheren Zusammenhalt zwischen dem Antriebsteil 1 und dem Abtriebsteil 2 gilt es, eine beide Teile axial zusammenhaltende axial gerichtete Haltekraft F_{H} zu erzeugen, durch die letztlich auch das maximale zwischen dem An- und Abtriebsteil übertragbare Grenzdrehmoment Mₘₐₓ bestimmt ist. Wird einsatzbedingt das maximale Drehmoment Mₘₐₓ zwischen An- und Abtriebsteil überschritten, so wirken auf die kugelförmig ausgebildeten Verbindungsmittel V in Rotationsrichtung orientierte Querkräfte durch die die kugelförmigen Verbindungsmittel V letztlich in Rotationsrichtung aus ihren gegenkonturierten Ausnehmungen seitens des An- und Abtriebsteils ausgelenkt werden, wodurch sie gleichzeitig axial orientierte Verdrängungskräfte zwischen dem An- und Abtriebsteil erzeugen und letztlich den das Drehmoment übertragenden Formschluss zwischen beiden Teilen aufheben.

Zur Realisierung der axialen Haltekraft F_{H}, die zwischen dem Antriebs- und Abtriebsteil im Zustand eines kraft- und formschlüssigen Eingriffes der Verbindungsmittel V mit dem An- und Abtrieb wirkt, ist im Gegensatz zu einem mechanischen Spannelement, beispielsweise in Form einer Spannkraft entfaltenden Feder, eine Kammer 3 vorgesehen, in der axial zur Drehachse D längs verschieblich ein Verdrängungskörper 4 angeordnet ist und die Kammer 3 in zwei Kammerteile 31, 32 unterteilt, wobei beide Kammerbereiche 31, 32 über einen Verbindungskanal 33 miteinander in Verbindung stehen. In dem in Figur 1 dargestellten Ausführungsbeispiel sei angenommen, dass der Antriebs- 1 und Abtriebsteil 2 rotationssymmetrisch zur Drehachse D ausgebildet sind; somit auch der Verdrängungskörper 4, der mit der Innenwand der Kammer 3 als Verbindungskanal 33 einen Ringspalt einschließt. Die Kammer 3 ist mit einer magnetorheologischen Flüssigkeit MRF vollständig gefüllt, so dass der Verdrängungskörper 4 allseitig von der magnetorheologischen Flüssigkeit MRF umspült ist.

In dem in Figur 1 dargestellten Ausführungsbeispiel weist der Verdrängungskörper 4 zusätzlich eine Elektromagneteinheit 5 auf, deren Magnetspulenwicklungen 51 jeweils dem Ringspalt 33 unmittelbar zugewandt angeordnet sind. Selbstverständlich ist es denkbar, die Magneteinheit auch in das nicht weiter dargestellte Kammergehäuse der Abtriebseinheit 1 zu integrieren oder aber auch in Form einer Permanentmagneteinheit auszubilden, die es zur Variation des Magnetfeldes entsprechend auszulenken gilt.

Der in der Kammer 3 angeordnete Verdrängungskörper 4 weist einen stegartigen Fortsatz 6 auf, der die axiale stirnseitige Kammerwand 7 durch eine fluiddichte Öffnung 8 überragt. Das stirnseitige Ende des stegartigen Fortsatzes 6 schließt mit einer plattenförmig ausgebildeten Kraftübertragungseinheit 9 ab, die innwandig an einer antriebsseitig vorgesehenen Gehäusewand 10 torsionsentkoppelt, d.h. im wesentlichen lose anliegt, so dass das antriebsseitige Gehäuse 10 bei entsprechender axialer Kraftwirkung durch die plattenförmige Kraftübertragungseinheit 9 in Richtung zur der Abtriebseinheit 1 gezogen bzw. gedrückt wird. Zur Erzeugung der in axialer Richtung zur Drehachse D wirkenden Haltekraft F_{H}, wird der Verdrängungskörper 4 innerhalb der Kammer 3 möglichst lagestabil durch die magnetorheologische Flüssigkeit gehalten, die aufgrund ihrer durch das vorherrschende Magnetfeld vorgebbaren Viskosität nur sehr verlangsamt bzw. schwer durch den Ringspalt hindurchströmen kann. Die von dem Verdrängungskörper 4 zu kompensierende Haltekraft F_{H} bewirkt ein Ausweichen der magnetorheologischen Flüssigkeit MRF von dem rechten Kammerteil 31 in den linken Kammerteil 32. Ist die Viskosität derart hoch, dass keine Flüssigkeitsströmung in den rechten Kammerteil 32 stattfindet, so ist die Kupplung geschlossen. Es ist ersichtlich, dass die magnetorheologische Flüssigkeit innerhalb der Kammer 3 ausschließlich der Erzeugung der axial wirkenden Haltekraft F_{H} dient und keinerlei rotationsbedingten Scherkräften ausgesetzt ist.

Tritt der Fall ein, bei dem ein die Haltekraft F_{H} übersteigendes Drehmoment M zwischen An- und Abtrieb auftritt, so wird der Verdrängungskörper 4 entgegen der auf diesen einwirkenden Verdrängungskräften aus seiner Position axialwärts in Richtung des Antriebsteils 1 bewegt, in diesem Fall vermag die Kupplung kein Drehmoment mehr zwischen An- und Abtriebsteil zu übertragen.

In vorteilhafter Weise wird in diesem Zustand die Stärke des Magnetfeldes im Ringraum 33 reduziert bzw. vollständig abgeschaltet, um verbleibende axial wirkende Haltekräfte, die zu einem erhöhten Verschleiß an den kugelförmigen Verbindungsmitteln V sowie auch an den an die Kugelkontur angepassten Ausnehmungen führen würden, zu reduzieren bzw. zu vermeiden.

Zu Zwecken der Rückführung der gelösten bzw. geöffneten Kupplung in den eingangs geschilderten Ausgangszustand gilt es das wirksame Magnetfeld innerhalb des Ringspaltes 33 abzuschalten, wodurch die Viskosität reduziert und der Verdrängungskörper unter Aufwendung geringer axialer Verstellkräfte in eine vorzugsweise mittig zur Kammer angeordnete axiale Ausgangsstellung rücküberführt wird. Zur Generierung der rückführenden Stellkräfte reicht eine Rückstellfeder 11 mit geringer Federkraft aus, die im dargestellten Ausführungsbeispiel in Figur 1 außerhalb der Kammer 3 angeordnet ist und über einen rückseitig am Verdrängungskörper 4 angebrachten weiteren stegartigen Fortsatz 12, der eine rückseitige Kammerwand 13 fluiddicht überragt in Wirkverbindung steht. Alternativ zu einer derartigen Ausführungsvariante ist es zur Vermeidung unnötiger fluiddichter Kammeröffnungen ebenso möglich, die Rückstellfeder 11 innerhalb der Kammer beispielsweise im Bereich des Kammerteils 31 zwischen der Kammerwand 7 und dem Verdrängungskörper 4 koaxial zum stegartigen Fortsatz 6 vorzusehen.

In Figur 2 ist ein weiteres Ausführungsbeispiel für ein drehmomentbegrenztes Kupplungselement dargestellt, das ein Drehmoment M von Seiten eines hülsenartig ausgebildeten Antriebteils 1 auf ein koaxial radial innen liegendes Abtriebteil 2 zu übertragen vermag. Das Abtriebteil 2 weist in vergleichbarer Anordnung zum Ausführungsbeispiel gemäß Figur 1 eine mit einer magnetorheologischen Flüssigkeit MRF gefüllte Kammer 3 auf, in der ein axial zur Drehachse D bidirektional auslenkbarer Verdrängungskörper 4 eingebracht ist. Der Verdrängungskörper 4 unterteilt die Kammer 3 ebenfalls in einen linken und rechten Kammerteil 31, 32, wobei beide Kammerteile 31, 32 durch einen dünnen Ringkanal 33 fluidisch miteinander verbunden sind. In gleicher Weise wie auch im Ausführungsbeispiel gemäß Figur 1 ist im Verdrängungskörper 4 eine Elektromagnetanordnung mit dem Ringspalt 33 zugewandten Magnetspulen 51 vorgesehen. In vorteilhafter Weise besteht der Verdrängungskörper 4 aus dem Magnetkern, um den die Magnetspulen 51 gewickelt sind. Der in diesem Fall mit dem Verdrängungskörper 4 verbundene stegartige Fortsatz 6, der die stirnseitige Kammerwand 7 durch eine fluiddichte Öffnung 8 durchragt, weist einen konusförmig strukturierten Formkörper 14 auf, längs dessen konische Kulissenflächen kugelförmig ausgebildete Verbindungsmittel V anliegen, die in einer Ausgangsstellung durch den konisch strukturierten Formkörper 14 radial nach außen gedrückt werden, wobei die kugelförmigen Verbindungsmittel V in sphärische Ausnehmungen 15 längs des hülsenartig ausgebildeten Antriebsteils 1 einmünden und mit dem Antriebsteil 1 eine kraftbeaufschlagte Formschlussverbindung eingehen. In Abhängigkeit des zwischen dem An- und Abtriebsteils vorherrschenden Drehmomentes M sowie der Geometrie der sphärischen Ausnehmungen 15 innerhalb des hülsenartigen Antriebs 1 entsteht eine Kraft in Drehrichtung um die Drehachse D, die zu einer Verschiebung der kugelförmigen Verbindungselemente V in Radialrichtung führt. Ist die Verschiebung größer als der Kugeldurchmesser bzw. die Eintauchtiefe, mit der die einzelnen Kugeln in die sphärischen Ausnehmungen 15 des hülsenartigen Antriebs 1 einmünden, so beginnt der Antriebsteil 1 relativ zum Abtriebsteil 2 durchzurutschen.

In diesem Fall kann kein Drehmoment mehr übertragen werden, so dass die Funktion einer drehmomentbegrenzten Sicherheitskupplung erfüllt ist.

Für eine Rückführung des Verdrängungskörpers 4 innerhalb der Kammer 3 in die ursprüngliche Ausgangsstellung wird das wirksame Magnetfeld abgeschaltet, wodurch die magnetorheologische Flüssigkeit niederviskos wird, so dass letztlich der Verdrängungskörper 4 durch wirksam werden der rückstellenden Kraft der Rückstellfeder 11, die zwischen in diesem Fall zwischen der stirnseitigen Innenseite der Kammerwand 7 und dem Verdrängungskörper 4 angeordnet ist, rücküberführt werden kann.

Das lösungsgemäße drehmomentbegrenzte Kupplungselement lässt sich neben dem erwähnten Einsatzzweck zur Realisierung eines Drehmomentschlüssels auch in anderen technischen Einrichtungen einsetzen, so beispielsweise als Sicherheitskupplung in Werkzeugmaschinen, Handmaschinen, wie beispielsweise Bohrgeräten, in Form einer Kupplung in Antriebssträngen von Fahrzeugen, landwirtschaftlichen Geräten sowie auch Baumaschinen jeglicher Art.

### Bezugszeichenliste

- 1: Antriebteil
- 1': Hülsenelement
- 2: Abtriebteil
- 3: Kammer
- 31: erster Kammerteil
- 32: zweiter Kammerteil
- 33: Ringspalt
- 4: Verdrängungskörper
- 5: Elektromagnetanordnung
- 51: Magnetspulen
- 6: stegartiger Fortsatz
- 7: stirnseitige Kammerwand
- 8: fluiddichte Öffnung
- 9: gertenartige Kraftübertragungseinheit
- 10: antriebsseitige Kammerwand
- 11: Rückstellfeder
- 12: rückseitiger stegartiger Fortsatz
- 13: rückseitige Kammerwand
- 14: konisch strukturierter Formkörper
- 15: sphärische Ausnehmung
- V: Verbindungsmittel
- D: Drehachse

## Patentansprüche

1. Drehmomentbegrenztes Kupplungselement mit jeweils einem, um eine gemeinsame Drehachse (D) drehbar gelagerten An- und Abtriebsteil (1, 2), und wenigstens einem Verbindungsmittel (V), das aus einer ersten Position, in der das Verbindungsmittel (V) den An- und Abtriebsteil (1, 2) unter Ausbildung eines Formschlusses drehfest miteinander verbindet, bei Überschreiten eines vorgebbaren, zwischen dem An- und Abtriebsteil (1, 2) wirkenden Grenzdrehmomentes (Mₘₐₓ) in eine zweite Position überführbar ist, in der das An- und Abtriebsteil (1, 2) relativ zueinander drehbar gelagert sind,
**dadurch gekennzeichnet, dass** das wenigstens eine Verbindungsmittel (V) in der ersten Position mittel- oder unmittelbar in kraftschlüssiger Wirkverbindung mit einem innerhalb einer mit einer magnetorheologischen Flüssigkeit (MRF) gefüllten Kammer (3) beweglich gelagerten Verdrängungskörper (4) steht, dessen Position innerhalb der Kammer (3) von einer durch die magnetorheologische Flüssigkeit (MRF) hervorgerufenen Verdrängungskraft gestützt ist,
dass eine Magnetfelderzeugende Einheit (5) an oder in der Kammer (3) vorgesehen ist, durch die die Verdrängungskraft der magnetorheologischen Flüssigkeit (MRF) beeinflussbar ist, und
dass der Verdrängungskörper (4) bei Überschreiten des Grenzdrehmomentes (Mₘₐₓ) innerhalb der Kammer (3) entgegen der durch die magnetorheologische Flüssigkeit (MRF) hervorgerufenen Verdrängungskraft auslenkbar ist.

2. Drehmomentbegrenztes Kupplungselement nach Anspruch 1,
**dadurch gekennzeichnet, dass** der Verdrängungskörper (4) die Kammer (3) in zwei Kammerteile (31, 32) trennt, die über wenigstens einen Verbindungskanal (33) miteinander verbunden sind, und
dass die Magnetfelderzeugende Einheit (5) zur Erzeugung eines Magnetfeldes im Bereich des wenigstens einen Verbindungskanal (33) ausgebildet und angeordnet ist.

3. Drehmomentbegrenztes Kupplungselement nach Anspruch 2,
**dadurch gekennzeichnet, dass** der Verdrängungskörper (4) innerhalb der Kammer (3) längs einer Linearachse bidirektional auslenkbar zwangsgeführt ist,
dass die zwei Kammerteile (31, 32) längs zur Linearachse dem Verdrängungskörper (4) gegenüberliegen, und
dass der Verdrängungskörper (4) mit der Kammerinnenwand den die beiden Kammerteile (31, 32) miteinander verbindenden Verbindungskanal (33) in Form eines Zwischenspalts einschließt.

4. Drehmomentbegrenztes Kupplungselement nach einem der Ansprüche 1 bis 3,
**dadurch gekennzeichnet, dass** der Verdrängungskörper (4) eine Elektromagnetanordnung (5) und/oder eine Permanentmagnetanordnung aufweist.

5. Drehmomentbegrenztes Kupplungselement nach einem der Ansprüche 1 bis 4,
**dadurch gekennzeichnet, dass** der Verdrängungskörper (4) mit einer Rückstellfeder (11) in Wirkverbindung steht, die den Verdrängungskörper (4) in die Position drängt, bei der sich das wenigstens eine Verbindungsmittel (V) in der ersten Position befindet.

6. Drehmomentbegrenztes Kupplungselement nach einem der Ansprüche 1 bis 5,
**dadurch gekennzeichnet, dass** der Verdrängungskörper (4) wenigstens einen stegartigen Fortsatz (6) vorsieht, der eine Kammerwand (7) der Kammer (3) fluiddicht durchragt und mittelbar oder unmittelbar mit dem wenigstens einen Verbindungsmittel (V) in Kontakt steht.

7. Drehmomentbegrenztes Kupplungselement nach Anspruch 6,
**dadurch gekennzeichnet, dass** der stegartige Fortsatz (6) außerhalb der Kammer (3) mit einem plattenartigen Element (10) in Wirkverbindung steht, das mit der Kammerwand (7) einen Trennspalt einschließt,
dass das plattenartige Element (10) und die Kammerwand (7) jeweils eine an wenigstens einen Rollkörper angepasste Ausnehmung (15) im Bereich des Trennspaltes derart vorsehen, so dass wenigstens ein, von beiden Ausnehmungen (15) eingeschlossenes Verbindungselement (V) in Form eines Rollkörpers eine lose Formschlussverbindung zwischen dem plattenartigen Element (10) und der Kammerwand (7) herstellt, und
dass das plattenartige Element (10) um die Längserstreckung des stegartigen Fortsatzes (6) relativ zur Kammerwand (7) derart drehbar gelagert ist, so dass bei Verdrehen des plattenartigen Elementes (6) das wenigstens eine Verbindungsmittel (V) aus den Ausnehmungen (15) heraustritt, wodurch sich der Trennspalt vergrößert und der Verdrängungskörper (4) innerhalb der Kammer (3) ausgelenkt wird.

8. Drehmomentbegrenztes Kupplungselement nach Anspruch 7,
**dadurch gekennzeichnet, dass** das plattenartige Element (9) Teil des Antriebteils (1) und die Kammer (3) mit dem darin vorgesehenen Verdrängungskörper (4) nebst dem stegartigen Fortsatz (6) Teil des Abtriebteils (2) sind oder umgekehrt.

9. Drehmomentbegrenztes Kupplungselement nach Anspruch 6,
**dadurch gekennzeichnet, dass** der stegartige Fortsatz (6) in dessen Längserstreckung außerhalb der Kammer (3) eine konisch strukturierte Führungskulisse (14) aufweist, um die verteilt wenigstens zwei, vorzugsweise drei oder mehr kugelförmig ausgebildete Verbindungsmittel (V) vorgesehen sind, die jeweils in eine Ausnehmung (15) innerhalb eines die Anordnung der kugelförmigen Verbindungsmittel (V) radial umgebenden Hülsenelementes (1) unter Ausbildung einer Formschlussverbindung zwischen der konisch strukturierten Führungskulisse (14) und dem Hülsenelement (1') lose einmünden,
dass das Hülsenelement (1') um die Längserstreckung des stegartigen Fortsatzes (6) drehbar gelagert ist, so dass bei Verdrehen des Hülsenelementes (1') die wenigstens zwei kugelförmigen Verbindungselemente (V) aus den Ausnehmungen (15) radial in Richtung des stegartigen Fortsatzes (6) verdrängt werden, wodurch der stegartige Fortsatz (6) und damit verbunden der Verdrängungskörper (4) innerhalb der Kammer (3) in Längserstreckung zum stegartigen Fortsatz (6) ausgelenkt wird.

10. Drehmomentbegrenztes Kupplungselement nach Anspruch 9,
**dadurch gekennzeichnet, dass** das Hülsenelement (1') Teil des Antriebteils (1) und die Kammer (3) mit dem darin vorgesehenen Verdrängungskörper (4) nebst dem stegartigen Fortsatz (6) Teil des Abtriebteils (2) sind oder umgekehrt.

11. Verfahren zum drehmomentbegrenzten Kuppeln zwischen einem, um eine gemeinsame Drehachse drehbar gelagerten Antriebsteil (1) und einem Abtriebsteil, (2) bei dem beide Teile mit wenigstens einem Verbindungsmittel (V) zu Zwecken der Drehmomentübertragung eine lösbar feste Formschlussverbindung derart eingehen, dass das wenigstens eine Verbindungsmittel (V) aus einer ersten Position, in der das Verbindungsmittel (V) den An- und Abtriebsteil (1,2) unter Ausbildung eines Formschlusses drehfest miteinander verbindet, bei Überschreiten eines vorgebbaren, zwischen dem An- und Abtriebsteil (1,2) wirkenden Grenzdrehmomentes in eine zweite Position übergeführt wird, in der sich das An- und Abtriebsteil (1,2) relativ zueinander drehen, wobei das Grenzdrehmoment mit Hilfe einer magnetorheologischen Flüssigkeit (MRF) beeinflusst wird, die mit einem Magnetfeld in Wechselwirkung tritt, **dadurch gekennzeichnet, dass** zur Drehmomentübertragung Haltekräfte auf das wenigstens eine Verbindungsmittel (V) zur Aufrechterhaltung der Formschlussverbindung wirken, die von einem innerhalb einer mit der magnetorheologischen Flüssigkeit gefüllten Kammer beweglich gelagerten Verdrängungskörper (4) aufgenommen werden, der aufgrund eines innerhalb der Kammer (3) vorherrschenden auf den Verdrängungskörper (4) einwirkenden Kräftegleichgewichtes in einer raumstabilen Position gehalten wird, und dass bei Überschreiten des Grenzdrehmomentes das Kräftegleichgewicht gestört und der Verdrängungskörper innerhalb der Kammer (3) ausgelenkt wird, wodurch die Formschlussverbindung gelöst wird.

12. Verfahren nach Anspruch 11,
**dadurch gekennzeichnet, dass** die Stärke des Magnetfeldes variabel eingestellt wird.

13. Verfahren nach Anspruch 12,
**dadurch gekennzeichnet, dass** bei Überschreiten des Grenzdrehmomentes das vorherrschende Magnetfeld abgeschaltet oder zumindest reduziert wird.

14. Verfahren nach einem der Ansprüche 11 bis 13,
**dadurch gekennzeichnet, dass** das zwischen dem An- und Abtriebsteil (1,2) herrschende Drehmoment sensorisch erfasst wird.

15. Verfahren nach Anspruch 11,
**dadurch gekennzeichnet, dass** das Kräftegleichgewicht durch eine der magnetorheologischen Flüssigkeit (MRF) zu eigene Viskosität bestimmt wird, die durch die Magnetfeldstärke des Magnetfeldes beeinflusst wird.

16. Verwendung des drehmomentbegrenzten Kupplungselements nach einem der Ansprüche 1 bis 10 in einem Drehmomentenschlüssels.

17. Verwendung des drehmomentbegrenzten Kupplungselements nach einem der Ansprüche 1 bis 10 in einer Sicherheitskupplung für eine Werkzeugmaschine.

## Claims

1. A torque-limited coupling element having a drive and an output part (1, 2), which are mounted such that they can rotate about a common rotation axis (D), and at least one connection means (V), which can be transferred from a first position, in which the connection means (V) connects the drive and output parts (1, 2) to each other in a rotationally fixed manner, forming a form fit, into a second position, in which the drive and output parts (1, 2) are mounted such that they can rotate relative to each other, when a predefinable limit torque (Mₘₐₓ) effective between the drive and output parts (1, 2) is exceeded,
**characterised in that**
the at least one connection means (V) in the first position is directly or indirectly, functionally connected in a force-fitting manner to a displacement body (4), which is mounted movably inside a chamber (3) filled with a magnetorheological liquid (MRF) and the position of which inside the chamber (3) is supported by a displacement force caused by the magnetorheological liquid (MRF),
a unit (5) that generates a magnetic field is provided at or in the chamber (3), by means of which unit the displacement force of the magnetorheological liquid (MRF) can be influenced, and
the displacement body (4) can be deflected inside the chamber (3) counter to the displacement force caused by the magnetorheological liquid (MRF) when the limit torque (Mₘₐₓ) is exceeded.

2. The torque-limited coupling element according to Claim 1,
**characterised in that**
the displacement body (4) divides the chamber (3) into two chamber parts (31, 32), which are connected to each other by means of at least one connection channel (33), and
the unit (5) that generates a magnetic field is formed and arranged to generate a magnetic field in the region of the at least one connection channel (33).

3. The torque-limited coupling element according to Claim 2,
**characterised in that**
the displacement body (4) is positively driven such that it can be deflected bidirectionally along a linear axis inside the chamber (3),
the two chamber parts (31, 32) lie opposite the displacement body (4) along the linear axis, and
the displacement body (4) together with the chamber inner wall encloses the connection channel (33) that connects the two chamber parts (31, 32) to each other in the form of an interstice.

4. The torque-limited coupling element according to any one of Claims 1 to 3,
**characterised in that**
the displacement body (4) has an electromagnet arrangement (5) and/or a permanent magnet arrangement.

5. The torque-limited coupling element according to any one of Claims 1 to 4,
**characterised in that**
the displacement body (4) is functionally connected to a restoring spring (11), which pushes the displacement body (4) into the position with which the at least one connection means (V) is in the first position.

6. The torque-limited coupling element according to any one of Claims 1 to 5,
**characterised in that**
the displacement body (4) provides at least one web-like projection (6), which passes through a chamber wall (7) of the chamber (3) in a fluid-tight manner and is directly or indirectly in contact with the at least one connection means (V).

7. The torque-limited coupling element according to Claim 6,
**characterised in that**
the web-like projection (6) is functionally connected outside the chamber (3) to a plate-like element (10), which together with the chamber wall (7) encloses a separating gap,
the plate-like element (10) and the chamber wall (7) each provide a recess (15), which fits at least one rolling body, in the region of the separating gap in such a manner that at least one connection element (V) in the form of a rolling body, which is enclosed by both recesses (15), produces a loose form-fitting connection between the plate-like element (10) and the chamber wall (7), and
the plate-like element (10) is mounted such that it can rotate about the longitudinal extent of the web-like projection (6) relative to the chamber wall (7) in such a manner that, when the plate-like element (6) is rotated, the at least one connection means (V) exits from the recesses (15), as a result of which the separating gap becomes larger and the displacement body (4) is deflected inside the chamber (3).

8. The torque-limited coupling element according to Claim 7,
**characterised in that**
the plate-like element (9) is part of the drive part (1), and the chamber (3) with the displacement body (4) provided therein along with the web-like projection (6) are part of the output part (2), or vice versa.

9. The torque-limited coupling element according to Claim 6,
**characterised in that**
the web-like projection (6) has in its longitudinal extent outside the chamber (3) a conically structured guide gate (14), distributed around which at least two, preferably three or more spherical connection means (V) are provided, which each open loosely into a recess (15) inside a sleeve element (1) that radially surrounds the arrangement of spherical connection means (V), forming a form-fitting connection between the conically structured guide gate (14) and the sleeve element (1'),
the sleeve element (1') is mounted such that it can rotate about the longitudinal extent of the web-like projection (6), so that when the sleeve element (1') rotates, the at least two spherical connection elements (V) are displaced radially out of the recesses (15) in the direction of the web-like projection (6), as a result of which the web-like projection (6), and in connection with this the displacement body (4) inside the chamber (3), is deflected in the longitudinal extent to the web-like projection (6).

10. The torque-limited coupling element according to Claim 9,
**characterised in that**
the sleeve element (1') is part of the drive part (1), and the chamber (3) with the displacement body (4) provided therein along with the web-like projection (6) are part of the output part (2), or vice versa.

11. A method for torque-limited coupling between a drive part (1) and an output part (2), which are mounted such that they can rotate about a common rotation axis, in which both parts enter into a detachably fixed form-fitting connection with at least one connection means (V) for the purpose of torque transmission in such a manner that the at least one connection means (V) is transferred from a first position, in which the connection means (V) connects the drive and output parts (1, 2) to each other in a rotationally fixed manner, forming a form fit, into a second position, in which the drive and output parts (1, 2) rotate relative to each other, when a predefinable limit torque effective between the drive and output parts (1, 2) is exceeded, wherein the limit torque is influenced with the aid of a magnetorheological liquid (MRF), which interacts with a magnetic field,
**characterised in that**
for torque transmission, retaining forces act on the at least one connection means (V) to maintain the form-fitting connection, which are absorbed by a displacement body (4), which is mounted movably inside a chamber filled with the magnetorheological liquid and is held in a spatially stable position owing to a force equilibrium effective on the displacement body (4) and prevailing inside the chamber (3), and that when the limit torque is exceeded, the force equilibrium is destroyed and the displacement body is deflected inside the chamber (3), as a result of which the form-fitting connection is broken.

12. The method according to Claim 11,
**characterised in that**
the strength of the magnetic field is variably adjusted.

13. The method according to Claim 12,
**characterised in that**
when the limit torque is exceeded, the prevailing magnetic field is switched off or at least reduced.

14. The method according to any one of Claims 11 to 13,
**characterised in that**
the torque prevailing between the drive and output parts (1, 2) is detected by sensors.

15. The method according to Claim 11,
**characterised in that**
the force equilibrium is determined by a viscosity of the magnetorheological liquid (MRF), which is influenced by the magnetic field strength of the magnetic field.

16. A use of the torque-limited coupling element according to any one of Claims 1 to 10 in a torque wrench.

17. A use of the torque-limited coupling element according to any one of Claims 1 to 10 in a safety coupling for a machine tool.

## Revendications

1. Elément d'accouplement à couple de rotation limité comportant respectivement une partie d'entraînement et une partie de sortie (1, 2) positionnées rotativement autour d'un axe de rotation commun (D) et au moins un moyen de liaison (V), qui à partir d'une première position, dans laquelle le moyen de liaison (V) relie la partie d'entraînement et la partie de sortie (1, 2) de manière solidaire en rotation en formant une conjonction de forme, lors du dépassement d'un couple de rotation limite (Mₘₐₓ) prescrit, agissant entre la partie d'entraînement et la partie de sortie (1, 2) peut être amené dans une deuxième position, dans laquelle la partie d'entraînement et la partie de sortie (1, 2) sont positionnées rotativement l'une par rapport à l'autre,
**caractérisé en ce que** au moins un moyen de liaison (V) dans la première position se trouve directement ou indirectement en liaison opérationnelle par conjonction de force avec un corps de refoulement (4) positionné de manière mobile à l'intérieur d'une chambre (3) remplie d'un liquide magnéto-rhéologique (MRF), dont la position à l'intérieur de la chambre (3) est appuyée par une force de refoulement provoquée par le liquide magnéto-rhéologique (MRF),
**en ce que** une unité générant un champ magnétique (5) est prévue sur ou dans la chambre (3), par l'intermédiaire de laquelle la force de refoulement du liquide magnéto-rhéologique (MRF) peut être influencée, et
**en ce que** le corps de roulement (4) lors du dépassement du couple de rotation limite (Mₘₐₓ) peut être dévié à l'intérieur de la chambre (3) en sens contraire à la force de roulement provoquée par le liquide magnéto-rhéologique (MRF).

2. Elément d'accouplement à couple de rotation limité selon la revendication 1,
**caractérisé en ce que** le corps de refoulement (4) sépare la chambre (3) en deux parties de chambre (31, 32), qui sont reliées l'une à l'autre par l'intermédiaire d'au moins un canal de liaison (33), et
**en ce que** l'unité générant un champ magnétique (5) est conçue et disposée pour produire un champ magnétique au niveau d'au moins un canal de liaison (33).

3. Elément d'accouplement à couple de rotation limité selon la revendication 2,
**caractérisé en ce que** le corps de refoulement (4) est guidé par contrainte à l'intérieur de la chambre (3) le long d'un axe linéaire de manière déviable bidirectionnellement,
**en ce que** les deux parties de chambre (31, 32) sont disposées en vis-à-vis du corps de refoulement (4) le long de l'axe linéaire, et
**en ce que** le corps de refoulement (4) définit avec la paroi intérieure de chambre le canal de liaison (33) reliant les deux parties de chambre (31, 32) sous la forme d'un interstice intermédiaire.

4. Elément d'accouplement à couple de rotation limité selon une des revendications 1 à 3,
**caractérisé en ce que** le corps de refoulement (4) présente un dispositif d'électroaimant (5) et/ou un dispositif d'aimant permanent.

5. Elément d'accouplement à couple de rotation limité selon une des revendications 1 à 4,
**caractérisé en ce que** le corps de refoulement (4) est en liaison opérationnelle avec un ressort de rappel élastique (11), qui refoule le corps de refoulement (4) dans la position, dans laquelle se trouve au moins un moyen de liaison (V) dans la première position.

6. Elément d'accouplement à couple de rotation limité selon une des revendications 1 à 5,
**caractérisé en ce que** le corps de refoulement (4) présente au moins un prolongement en forme de gradin (6), qui traverse de manière étanche au fluide une paroi de chambre (7) de la chambre (3) et est en contact direct ou indirecte avec au moins un moyen de liaison (V).

7. Elément d'accouplement à couple de rotation limité selon la revendication 6,
**caractérisé en ce que** le prolongement en forme de gradin (6) est en liaison opérationnelle à l'extérieur de la chambre (3) avec un élément de type plaque (10), qui définit avec la paroi de chambre (7) une fente de séparation,
**en ce que** l'élément en forme de plaque (10) et la paroi de chambre (7) présentent respectivement un évidement (15) adapté à au moins un corps de rouleau au niveau de la fente de séparation, de telle sorte qu'au moins un élément de liaison (V) défini par les deux évidements (15) établisse sous la forme d'un corps de rouleau une liaison par conjonction de forme libérable entre l'élément en forme de plaque (10) et la paroi de chambre (7), et
**en ce que** l'élément en forme de plaque (10) est positionné rotativement autour de l'extension longitudinale du prolongement en forme de gradin (6) par rapport à la paroi de chambre (7), de telle sorte que lors d'une torsion de l'élément en forme de plaque (6) au moins un moyen de liaison (V) ressorte des évidements (15), moyennant quoi la fente de séparation est agrandie et le corps de refoulement (4) est dévié à l'intérieur de la chambre (3).

8. Elément d'accouplement à couple de rotation limité selon la revendication 7,
**caractérisé en ce que** l'élément en forme de plaque (9) fait partie de la partie d'entraînement (1) et la chambre (3) fait partie avec le corps de refoulement (4) prévu à l'intérieur à côté du prolongement en forme de gradin (6) de la partie de sortie (2) ou inversement.

9. Elément d'accouplement à couple de rotation limité selon la revendication 6,
**caractérisé en ce que** le prolongement en forme de gradin (6) présente dans son extension longitudinale à l'extérieur de la chambre (3) une coulisse de guidage (14) de structure conique, autour de laquelle sont réparties au moins deux, de préférence trois ou plus moyens de liaison (V) sphériques, qui débouchent de manière libérable respectivement dans un évidement (15) à l'intérieur d'un élément de manchon (1) entourant radialement la disposition des moyens de liaison sphérique (V) en formant une liaison par conjonction de forme entre la coulisse de guidage (14) de structure conique et l'élément de manchon (1'),
**en ce que** l'élément de manchon (1') est positionné rotativement autour de l'extension longitudinale du prolongement en forme de gradin (6), de telle sorte que lors d'une torsion de l'élément de manchon (1') au moins deux élément de liaison (V) sphériques sont refoulés hors des évidements (15) radialement dans la direction du prolongement en forme de gradin (6), moyennant quoi le prolongement en forme de gradin (6) et le corps de refoulement (4) ainsi relié sont déviés à l'intérieur de la chambre (3) dans l'extension longitudinale allant vers le prolongement en forme de gradin (6).

10. Elément d'accouplement à couple de rotation limité selon la revendication 9,
**caractérisé en ce que** l'élément de manchon (1') fait partie de la partie d'entraînement (1) et la chambre (3) avec le corps de refoulement (4) prévu dans celle-ci à côté du prolongement en forme de gradin (6) fait partie de la partie de sortie (2) ou inversement.

11. Procédé d'accouplement à couple de rotation limité entre une partie d'entraînement (1) et une partie de sortie (2) positionnées rotativement autour d'un axe de rotation commun, dans lequel les deux parties définissent avec au moins un moyen de liaison (V) à des fins de transmission de couple de rotation une liaison par conjonction de forme libérable, en ce que au moins un moyen de liaison (V) à partir d'une première position, dans laquelle le moyen de liaison (V) relie de manière solidaire en rotation la partie d'entraînement et la partie de sortie (1, 2) en formant une conjonction de forme, lors du dépassement d'un couple de rotation limite prescrit, agissant entre la partie d'entraînement et la partie de sortie (1, 2) est passé dans une deuxième position, dans laquelle la partie d'entraînement et la partie de sortie (1, 2) tournent l'une par rapport à l'autre, dans lequel le couple de rotation limite est influencé à l'aide d'un liquide magnéto-rhéologique (MRF), qui entre en interaction avec un champ magnétique,
**caractérisé en ce que** des forces de retenue à des fins de transmission de couple de rotation agissent sur au moins un moyen de liaison (V) pour conserver la liaison par conjonction de forme, qui sont absorbées par un corps de refoulement (4) positionné de manière mobile à l'intérieur d'une chambre remplie du liquide magnéto-rhéologique, qui est maintenue dans une position spatiale stable en raison d'un équilibre des forces agissant à l'intérieur de la chambre (3) prédominant sur le corps de refoulement (4) et
**en ce que** lors du dépassement du couple de rotation limité l'équilibre des forces est perturbé et le corps de refoulement est dévié à l'intérieur de la chambre (3), moyennant quoi la liaison par conjonction de forme est libérée.

12. Procédé selon la revendication 11,
**caractérisé en ce que** l'intensité du champ magnétique est réglée de manière variable.

13. Procédé selon la revendication 12,
**caractérisé en ce qu'**en cas de dépassement du couple de rotation limite le champ magnétique prédominant est éteint ou au moins réduit.

14. Procédé selon une des revendications 11 à 13,
**caractérisé en ce que** entre la partie d'entraînement et la partie de sortie (1, 2) un couple de rotation prédominant est détecté.

15. Procédé selon la revendication 11,
**caractérisé en ce que** l'équilibre des forces est déterminé par un des liquides magnétorhéologique (MRF) par rapport à sa viscosité propre, qui est influencée par l'intensité de champ magnétique du champ magnétique.

16. Utilisation de l'élément de couplage à couple de rotation limité selon une des revendications 1 à 10 dans une clé dynamométrique.

17. Utilisation de l'élément de couplage à couple de rotation limité selon une des revendications 1 à 10 dans un couplage de sécurité pour une machine-outil.
